Europäisches Patentamt

European Patent Office

Office européen des brevets

(11) Veröffentlichungsnummer : **0 178 286**
**B1**

(12) **EUROPÄISCHE PATENTSCHRIFT**

(45) Veröffentlichungstag der Patentschrift :
15.03.89

(51) Int. Cl.⁴ : **B 60 G 11/10, F 16 F 1/18**

(21) Anmeldenummer : 85890203.4

(22) Anmeldetag : 03.09.85

(54) Blattfeder.

(30) Priorität : 26.09.84 DE 3435251

(43) Veröffentlichungstag der Anmeldung :
16.04.86 Patentblatt 86/16

(45) Bekanntmachung des Hinweises auf die Patenterteilung : 15.03.89 Patentblatt 89/11

(84) Benannte Vertragsstaaten :
AT BE CH DE FR GB IT LI LU NL SE

(56) Entgegenhaltungen :
EP--A-- 0 162 191
DE--B-- 1 146 380
FR--A-- 2 552 375
US--A-- 2 762 445
US--A-- 3 900 357

(73) Patentinhaber : **BÖHLER AKTIENGESELLSCHAFT**
**Hansaallee 321**
**D-4000 Düsseldorf 11 (DE)**

(72) Erfinder : **Puck, Alfred, Prof. Dr.-Ing.**
**Am Ahlberg 33**
**D-3524 Immenhausen-Mariendorf (DE)**

(74) Vertreter : **Widtmann, Georg, Dr.**
**Vereinigte Edelstahlwerke Aktiengesellschaft (VEW)**
**Elisabethstrasse 12**
**A-1010 Wien (AT)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Blattfeder mit zumindest einem Federblatt, das mit faserverstärktem Kunststoff aufgebaut ist.

Kunststoffe, die mit Fasern, z. B. aus Glas, Kohlenstoff u. dgl. verstärkt sind, eignen sich hervorragend als Konstruktionswerkstoff für die verschiedensten Maschinenbauteile. Wesentlich bei der Ausgestaltung derartiger Bauteile ist jedoch, daß die Formgebung nicht aufgrund der konventionellen Gestaltung möglich ist, wie sie z. B. bei metallischen Werkstoffen durchgeführt wird, sondern daß die Formgebung werkstoffspezifisch ist. Ein wesentlicher Unterschied zwischen den faserverstärken Kunststoffen und den metallischen Werkstoffen kann darin liegen, daß die metallischen Werkstoffe im wesentlichen isotrope Eigenschaften aufweisen, wohingegen faserverstärkte Kunststoffe, z. B. wenn eine bevorzugte Orientierung der Fasern vorliegt, ausgesprochen anisotrop sind, und dieser Eigenschaft Rechnung getragen werden muß.

Im Bestreben, die Lebensdauer zu erhöhen und das Gewicht von Kraftfahrzeugen herabzusetzen, kommen immer mehr Kunststoffe zum Einsatz, wobei jeweils anzustreben ist, daß keine reine Substitution erfolgt, sondern daß die Vorteile, welche konstruktiv durch das neue Material erreicht werden können, auch voll zum Tragen kommen.

Es sind bereits Blattfedern, z. B. mit parabelförmigen Aufbau bekannt geworden, die im wesentlichen aus faserverstärkten Kunststoffen, z. B. glasfaserverstärktem Kunststoff, aufgebaut sind, wobei derartige Federn den Vorteil aufweisen, daß sie zum Unterschied von Stahlfedern, wenn lediglich ein einziges Federblatt vorgesehen ist, bei einer Beschädigung einen längeren Zeitraum bis zum Bruch benötigen, sodaß keine konstruktiven Vorkehrungen gegen einen derartigen, wenn auch selten auftretenden Vorfall vorgesehen sein müssen. Die Federeigenschaften einer Kunststoffeder können bei entsprechendem Aufbau denen einer Stahlfeder gleichgesetzt werden. Ein bislang ungelöstes Problem besteht allerdings in der Einleitung der Kräfte in die Feder, insbesondere im Mittelbereich der Feder, da jene bewährten Konstruktionen von der Stahlfeder nicht übernommen werden können. Insbesondere soll jede Schwächung des Kunststoffedernblattes vermieden werden, daher soll kein Herzbolzen od. dgl. durch das Federnblatt hindurchgeführt werden, da sonst Glasfasern verletzt und verdrängt werden, und die Feder bei Beanspruchung extrem zur Desintegrierung neigt.

Aus der US-A-3 900 357 wird eine Kunststoffeder bekannt, die mit glasfaserverstärktem Kunststoff aufgebaut ist, welche in ihrem Mittelbereich eine Klemmung aufweist. Diese Klemmung besteht aus zwei beidseitig des Federnblattes angeordneten Platten, die durch zwei Klammern gegen das Federblatt gepreßt werden. Eine derartige Klemmung verhindert zwar, daß das Federblatt bei der Montage der Klemmung verletzt wird, jedoch ist die Einleitung der Kräfte von einem Maschinenteil, z. B. der Achse eines Kraftfahrzeuges in die Feder nicht werkstoffgerecht, da beispielsweise der unterschiedlichen thermischen Ausdehnung der Werkstoffe, der erforderlichen freien Beweglichkeit des Federblattes, dem unter Umständen auftretenden Fließen des Werkstoffes, z. B. des Epoxidharzes, durch welchen die einzelnen Glasfasern miteinander verbunden sind, u. dgl. nicht Rechnung getragen wird.

Die Aufgabe der Erfindung besteht nun darin, eine Blattfeder zu schaffen, die eine werkstoffgerechte Einleitung der Kräfte in das Federnblatt ermöglicht, wobei gleichzeitig dem anisotropen Aufbau des Federnblattes und dem unterschiedlichen thermischen Ausdehnungskoeffizienten zwischen Klemmung und Federnblatt Rechnung getragen wird.

Aus der EP-A 162 191 ist nach Art. 54 (3) als Stand der Technik zu entnehmen :

Eine Blattfeder mit zumindest einem Federblatt, gegebenenfalls Parabelfederblatt, das mit faserverstärktem Kunststoff aufgebaut ist, wobei die Fasern, z. B. Glas-Kohlenstoffasern, vorzugsweise im wesentlichen in Federlängsrichtung orientiert sind, zum Verbinden von Maschinenteilen, z. B. Fahrzeugachsen mit einem Fahrgestell, wobei die beiden Endbereiche der Blattfeder, z. B. über je ein Auge, das drehbar um einen Bolzen gelagert ist, mit zumindest einem Maschinenteil und in den zwischen den beiden Enden liegenden Bereich über eine Einspannung mit dem weiteren Maschinenteil verbunden sind und die Einspannung zumindest, vorzugsweise zwei in Abstand bezogen auf die Federlängsrichtung voneinander angeordnete, die Feder getrennt voneinander angreifende und umfassende Klammern aufweist, von welchen zumindest eine Klammer an dem Federblatt im Klemmbereich flächig anliegt und die Feder zumindest bei einer Klammer in diesem Bereich eine Erhöhung und/oder Verbreiterung, die vorzugsweise mit dem faserverstärkten Kunststoff aufgebaut ist, aufweist. Demgegenüber sich unterscheidet die Erfindung dadurch, daß die Blattfeder zwischen zumindest zwei Klammern etwa quer, vorzugsweise normal, zu Federlängsrichtung beweglich ist. So ist dadurch sichergestellt, daß die Feder bei ihrer Beanspruchung nicht nur an ihren Endbereichen sondern auch im Mittelbereich die erforderliche Bewegung durchführen kann, was insbesondere bei Extrembelastungen, die zu einem sogenannten S-Schlag der Feder führen, besonders von hoher Bedeutung ist.

Weist die Klammer eine, im wesentlichen starre, vorzugsweise zweiteilige Umfassung auf, wobei zumindest eine zur Feder weisende, quer zur Bewegungsrichtung derselben liegende Fläche eine Keilfläche aufweist, so kann durch Ausbildung dieser Keilfläche den Druck- und Schubbeanspruchungen des Materials besonders vorteilhaft Rechnung getragen werden, womit eine besonders einfache und sichere Klemmung der Feder gewährleistet ist. Ist zwischen der starren Umfassung und der Feder ein Füllkörper, vorzugsweise ein in situ gefertigter Füllkörper aus einem organischen Kunststoff angeordnet, so wird eine Verletzung der Kunststoffeder oder der einzelnen Fasern derselben durch die starre Umfassung vermieden, wobei gleichzeitig ein vollflächiges Anliegen erfolgt, da insbesondere bei einem in situ gefertigten Füllkörper auch kleinste Unebenheiten ausgeglichen sind.

Ist der Füllkörper zumindest teilweise aus einem, vorzugsweise mit Stahlkugeln gefüllten organischen Kunststoff aufgebaut, so können Druckkräfte sehr gut zwischen Klemmung und Feder übermittelt werden, wobei die Füllstoffteilchen, bzw. die Kugeln, welche in hexagonal dichtester Kugelpackung oder in etwa hexagonal dichtester Kugelpackung vorliegen, ein Gleiten aneinander ermöglichen, sodaß eine Übertragung der Kräfte unter Ausgleich gegen Schubverformungen möglich ist, wobei dann der Kunststoff im wesentlichen die Aufgabe hat, die einzelnen Kugeln aneinander zu halten.

Als besonders vorteilhaft hat sich erwiesen, wenn die Stahlkugeln einen Durchmesser aufweisen, der etwa 1/5 bis etwa 1/20 des größten Normalabstandes zwischen starrer Umfassung und Feder beträgt.

Schließen die Keilflächen der starren Umfassung und die mit ihr kooperierenden Flächen der Erhöhung einen unterschiedlichen Winkel mit der neutralen Faser des Federnblattes ein, so kann dadurch eine hervorragende Klemmung erreicht werden, da der Winkel der Erhöhung derart bemessen werden kann, daß die eingeleiteten Schubkräfte noch nicht zur Desintegrierung der Feder beitragen, wohingegen die Keilkräfte, welche von der Umklammerung ausgeübt werden, z. B. unter Vermittlung eines Füllkörpers einen höheren Druck und damit bessere Fixierung erlauben.

Weisen sowohl die Umfassung als auch die Erhöhung zumindest zwei Keilflächen auf einer Seite der Feder auf, so ist eine besonders günstige Lagefixierung und auch eine neutrale Einleitung der Kräfte, gleichgültig von welcher Seite Längskräfte auftreten, gewährleistet.

Weist die starre Umfassung Rotationsflächen, vorzugsweise Zylinderflächen, die im wesentlichen quer zur Federnlängsrichtung angeordnet sind, auf, die mit entsprechenden Flächen in der Einspannung, vorzugsweise unter Zwischenschaltung eines Elastomeren od. dgl. kooperieren, so ist damit gewährleistet, daß jener Bereich des Federnblattes, der bei Beanspruchung durchschwingen soll, ebenfalls mitbewegt werden kann, sodaß ein wesentlich größerer Abstand der Lager zur Einspannung zur Verfügung stehen kann, womit erneut geringere Schubbeanspruchungen auf die Kunststoffeder ausgeübt werden, wobei keine unerwünschte Deformation der Feder eintritt.

Weist die Einspannung ein(en) zumindest zweiteilige(s)(n) Gehäuse, Käfig od. dgl. auf, welches(r) über Spannelemente, z. B. Bügel, Briden, mittelbar mit der Achse und über zumindest zwei Klammern mittelbar mit der Feder verbunden ist, so ist eine besonders einfach zu montierende und materialgerechte Konstruktion für eine Blattfeder verwirklicht.

Im folgenden wird die Erfindung anhand der Zeichnungen näher erläutert.

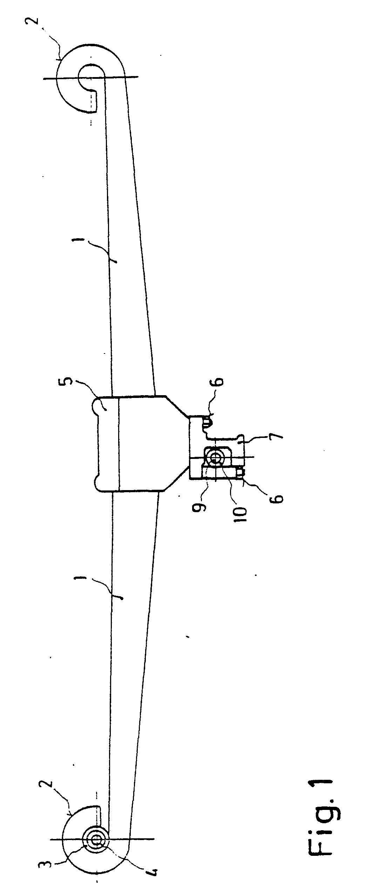

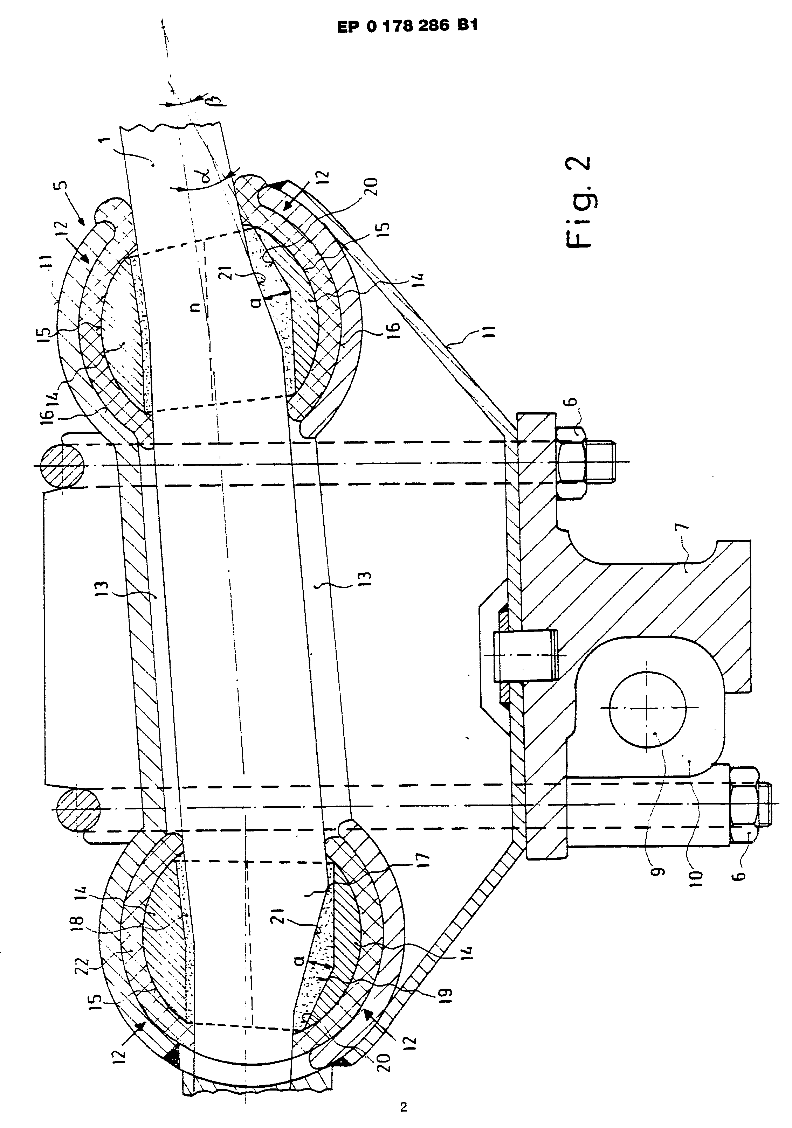

Es zeigen Fig. 1 eine Parabelfeder aus faserverstärktem Kunststoff und Fig. 2 die Verbindung zwischen einer Kraftfahrzeugachse und einem Federblatt.

Das in Fig. 1 dargestellte Federblatt 1 mit in und über die Federlängserstreckung sich erstreckenden Glasfasern weist an seinen beiden Enden Augen 2 auf, die offen sind. In diese Augen wird unter Zwischenschaltung eines Gummihohlzylinders 3 eine Stahlbüchse 4 eingepreßt, welche um einen Bolzen (nicht dargestellt) drehbar gelagert ist. Im Mittelbereich weist die Feder eine Einspannung 5 auf, die aus einem zweiteiligen Gehäuse besteht, welches über Schrauben 6, über eine Klemmeinrichtung 7 mit der Achse 9 des Fahrzeuges od. dgl. unter Zwischenschaltung eines Lagers 10 verbunden ist. Zum Schutz der einzelnen Glas- und/oder Kohlenstoffasern od. dgl. kann die Feder auch noch mit einer kunstharzimprägnierten Umhüllung mit z. B. einem Gewebe oder Vlies versehen werden.

Die in Fig. 2 im Schnitt dargestellte Einspannung 5 weist ein zweiteiliges Gehäuse 11 auf. Dieses Gehäuse besitzt Durchtrittsöffnungen, durch welche das Federblatt 1 herausragt. Im Gehäuse sind zwei Klammern 12 angeordnet, die die Feder in Abstand voneinander umfassen. Das Gehäuse ist so ausgestaltet, daß zwischen dem Federnblatt und dem Gehäuse, mit Ausnahme bei der Klammerung, eine freie Beweglichkeit gegeben ist. Dieser Zwischenraum 13 kann jedoch gegebenenfalls mit Kunststoff, Gummi od. dgl. ausgefüllt sein, ohne daß dadurch eine Beschädigung der Feder eintritt. Die Klammern 12 weisen jeweils eine im wesentlichen starre, Umfassung 14 aus Stahl auf, die Zylinderflächen 15 besitzt, mit welchen die starre Umfassung unter Zwischenschaltung einer Schichte aus Elastomeren 22, z. B. Gummi, mit einer Härte Shore A 80 in den Zylinderflächen 16 der Einspannung 5 drehbar gelagert ist. Die starren Umfassungen sind jeweils im Bereich einer Erhöhung 17, die aus dem faserverstärkten Kunststoff aufgebaut ist, angeordnet. Die Umfassungen liegen jeweils unter Zwischenschaltung eines in situ gefertigten Füllkörpers 18, 19 am Federnblatt an. Als Kunststoff eignet sich beispielsweise ein Epoxidharz auf Basis von Epichlorhydrin und einem aliphatischen Polyol. Der Kunststoff wird während der Fertigung mit Stahlkugeln eines Durchmessers von 0,6 bis 0,8 mm gefüllt, welcher somit ein Zehntel des größten Normalabstandes (a) zwischen Federnblattoberfläche und starrer Umfassung beträgt. Die Kugeln können auch aus einem anderen druckfesten Material, z. B. Hartmetall, Glas, Keramik od. dgl. sein, und es können weiters auch andere Thermo- bzw. Duroplaste zur Bindung der Kugeln verwendet werden. Gegebenenfalls kann auch ein gefüllter oder ungefüllter Kunststoff Verwendung finden.

Die Umfassung weist eine Keilfläche 20 auf, die mit einer Fläche 21 der Erhöhung 17 kooperiert. Die Keilfläche 20 schließt einen Winkel α mit der neutralen Faser n des Federblattes ein, der ca. 25° beträgt, wohingegen der Winkel β, welcher von der kooperierenden Fläche der Erhöhung mit der neutralen Faser des Federblattes eingeschlossen wird, lediglich 15° beträgt. Durch den größeren Winkel der starren Umfassung kann eine festere Klemmung erreicht werden, wobei der kleinere Winkel der Erhöhung der geringeren Schubbeanspruchungsfähigkeit in Richtung normal zur Faserverstärkung Rechnung trägt. Ein Formschluß der Umfassung wird, die bereits oben ausgeführt, durch den an Ort und Stelle gefertigten Füllkörper ermöglicht.

Bei der Fertigung der Kunststoffeder wird die parabelförmige Gestalt dadurch erhalten, daß ein Füllkörper im Mittenbereich vorgesehen ist. Die Glasfasern werden parallel zueinander in an sich bekannter Weise durch ein z. B. Epoxidharzbad gezogen und sodann auf und in einer geeigneten Form aufgewickelt, worauf die endgültige Formgebung erfolgt und das Kunstharz thermisch gehärtet wird.

## Patentansprüche

1. Blattfeder mit zumindest einem Federblatt (1), gegebenenfalls Parabelfederblatt, das mit faserverstärktem Kunststoff aufgebaut ist, wobei die Fasern, z. B. Glas-Kohlenstoffasern, vorzugsweise im wesentlichen in Federlängsrichtung orientiert sind, zum Verbinden von Maschinenteilen, z. B. Fahrzeugachsen mit einem Fahrgestell, wobei die beiden Endbereiche der Blattfeder, z. B. über je ein Auge (2), das drehbar um einen Bolzen gelagert ist, mit zumindest einem Maschinenteil und in dem zwischen den beiden Enden liegenden Bereich über eine Einspannung (5) mit einem weiteren Maschinenteil verbunden sind, und die Einspannung zumindest, vorzugsweise zwei in Abstand bezogen auf die Federlängsrichtung voneinander angeordnete, die Feder getrennt voneinander angreifende und umfassende Klammern (12) aufweist, von welchen zumindest eine Klammer an dem Federblatt (1) im Klemmbereich flächig anliegt und die Feder zumindest bei einer Klammer in diesem Bereich eine Erhöhung und/oder Verbreiterung (17), die vorzugsweise mit dem faserverstärkten Kunststoff aufgebaut ist, aufweist, wobei die Blattfeder (1) zwischen zumindest zwei Klammern (12) etwa quer, vorzugsweise normal, zur Federlängsrichtung beweglich ist.

2. Blattfeder nach Anspruch 1, dadurch gekennzeichnet, daß die Klammer (2) eine im wesentlichen starre, vorzugsweise zweiteilige, Umfassung (14) aufweist, wobei zumindest eine zur Feder weisende quer zur Bewegungsrichtung derselben liegende Fläche eine Keilfläche (20) aufweist.

3. Blattfeder nach Anspruch 1 und 2, dadurch gekennzeichnet, daß zwischen der starren Umfassung (14) und der Feder ein Füllkörper, vorzugsweise ein in situ gefertigter Füllkörper (18, 19) aus einem organischen Kunststoff angeordnet ist.

4. Blattfeder nach Anspruch 3, dadurch gekennzeichnet, daß der Füllkörper (18, 19) einen, vorzugsweise mit Kugeln, z. B. aus Stahl, gefüllten organischen Kunststoff aufweist.

5. Blattfeder nach Anspruch 4, dadurch gekennzeichnet, daß die Kugeln einen Durchmesser aufweisen, der etwa 1/5 bis etwa 1/20 des größten Normalabstandes (a) zwischen starrer Umfassung und Feder beträgt.

6. Blattfeder nach einem der Ansprüche 1 bis 5, dadurch gekennzeichnet, daß die Keilfläche (20) der starren Umfassung und die mit ihr kooperierenden Flächen (21) der Erhöhung und/oder Verbreiterung (17) einen unterschiedlichen Winkel mit der neutralen Faser des Federnblattes (1) einschließen.

7. Blattfeder nach einem der Ansprüche 1 bis 6, dadurch gekennzeichnet, daß der Winkel (α), welcher von der Keilfläche (20) der starren Umfassung mit der neutralen Faser (n) des Federblattes (1) eingeschlossen wird, größer ist als derjenige Winkel (β) der kooperierenden Fläche der Erhöhung und/oder Verbreiterung (17).

8. Blattfeder nach einem der Ansprüche 1 bis 7, dadurch gekennzeichnet, daß der Winkel (α) der Keilfläche (20) der Umfassung mit der neutralen Faser (n) des benachbarten Federblattes (1) zwischen 15° und 35°, vorzugsweise zwischen 20° und 30°, liegt.

9. Blattfeder nach einem der Ansprüche 1 bis 8, dadurch gekennzeichnet, daß der Winkel (β) der kooperierenden Fläche der Erhöhung und/oder Verbreiterung (17) mit der neutralen Faser (n) des benachbarten Federblattes zwischen 10° und 20°, vorzugsweise zwischen 13° und 17°, liegt.

10. Blattfeder nach einem der Ansprüche 1 bis 9, dadurch gekennzeichnet, daß sowohl die Umfassung als auch die Erhöhung und/oder Verbreiterung zumindest zwei Keilflächen auf einer Seite der Feder aufweisen, welche vorzugsweise unterschiedliche Winkel mit der neutralen Faser einschließen.

11. Blattfeder nach einem der Ansprüche 1 bis 10, dadurch gekennzeichnet, daß zumindest eine starre Umfassung Rotationsflächen, vorzugsweise Zylinderflächen (15), die im wesentlichen quer zur Federnlängsrichtung angeordnet sind, aufweist, die mit entsprechenden Flächen (16) in der Einspannung (5), vorzugsweise unter Zwischenschaltung eines Elastomeren (22) od. dgl., kooperieren.

12. Blattfeder nach einem der Ansprüche 1 bis 11, dadurch gekennzeichnet, daß die Einspannung (5) ein (en) zumindest zweiteilige(s) (n) Gehäuse (11), Käfig od. dgl. aufweist, welche(s) (r) über Spannelemente (6), z. B. Bügel, Briden, mittelbar mit der Achse und über zumindest zwei Klammern (12) mittelbar mit der Feder (1) verbunden ist.

13. Blattfeder nach einem der Ansprüche 1 bis 12, dadurch gekennzeichnet, daß zumindest teilweise die in Federlängsrichtung orientierten Fasern zumindest Federlänge aufweisen.

## Claims

1. A leaf spring with at least one spring leaf (1), where appropriate a parabolic spring leaf, which is formed with fibre-reinforced plastics material, the fibres, e. g. glass fibres or carbon fibres, being orientated preferably substantially in the longitudinal direction of the spring, for joining parts of a machine, e. g. vehicle axles to a vehicle frame, the two end regions of the leaf spring being connected, for example by way of an eyelet (2) in each case which is mounted so as to be rotatable about a pin, to at least one machine part and, in the region between the two ends, by way of a gripping means (5) to a further machine part, and the gripping means comprising at least preferably two clamps (12) which are arranged at a distance from each other with respect to the longitudinal direction of the spring and engage and embrace the spring separately from each other and of which at least one clamp rests in a planar manner on the spring leaf (1) in the clamping area, and at least in the case of one clamp the spring in this area comprising a raised and/or widened portion (17) which is preferably formed with the fibre-reinforced plastics material, and the leaf spring (1) being movable between at least two clamps (12) approximately transversely, and preferably at right angles, to the longitudinal direction of the spring.

2. A leaf spring according to Claim 1, characterized in that the clamp (12) has a substantially rigid, and preferably two-part, embracing means (14) at least one surface which faces the spring and which lies transversely to the direction of movement thereof comprising a wedge surface (20).

3. A leaf spring according to Claims 1 and 2, characterised in that a filling body, preferably a filling body (18, 19) prepared in situ, of in organic plastics material, is arranged between the rigid embracing mean (14) and the spring.

4. A leaf spring according to Claim 3, characterized in that the filling body (18, 19) comprises an organic plastics material preferably filling with balls, for example of steel.

5. A leaf spring according to Claim 4, characterized in that the balls have a diameter which amounts to approximately 1/5 to 1/20 of the maximum normal distance (a) between the rigid embracing means and the spring.

6. A leaf spring according to any one of Claims 1 to 5, characterized in that the wedge surface (20) of the rigid embracing means and the surfaces (21) of the raised and/or widened portion (17) cooperating therewith form different angles with the neutral fibre of the spring leaf (1).

7. A leaf spring according to any one of Claims 1 to 6, characterized in that the angle (α), which is formed by the wedge surface (20) of the rigid embracing means with the neutral fibre (n) of the spring leaf (1), is greater than the angle (β) of the cooperating surface of the raised and/or widened portion (17).

8. A leaf spring according to any one of Claims 1 to 7, characterized in that the angle (α) of the wedge surface (20) of the embracing means with the neutral fibre (n) of the adjacent spring leaf (1) is between 15° and 35°, preferably between 20° and 30°.

9. A leaf spring according to any one of Claims 1 to 8, characterized in that the angle (β) of the cooperating surface of the raised and/or widened portion (17) with the neutral fibre (n) of the adjacent spring leaf is between 10° and 20°, preferably between 13° and 17°.

10. A leaf spring according to any one of Claims 1 to 9, characterized in that both the embracing means and the raised and/or widened portion comprise at least two wedge surfaces on one side of the spring, which preferably form different angles with the neutral fibre.

11. A leaf spring according to any one of Claims 1 to 10, characterized in that at least one rigid embracing means comprises surfaces of revolution, preferably cylindrical surfaces (15), which are arranged substantially transversely to the longitudinal direction of the spring [and] which cooperate with corresponding surfaces (16) in the gripping means (5), preferably with the interposition of an elastomer (22) or the like.

12. A leaf spring according to any one of Claims 1 to 11, characterized in that the gripping means (5) comprises a casing (11), cage of the like in at least two parts, which is connected indirectly to the shaft by way of clamping elements (6), for example brackets or ties, and indirectly to the spring (1) by way of at least two clamps (12).

13. A leaf spring according to any one of Claims 1 to 12, characterized in that at least in part the fibres orientated in the longitudinal direction of the spring are at least the length of the spring.

## Revendications

1. Ressort à lames comportant au minimum une lame de ressort (1), parabolique le cas échéant, qui est construite en matière synthétique renforcée par fibres, celles-ci, des fibres de verre ou de carbone par exemple, étant de préférence essentiellement orientées dans le sens longitudinal du ressort, ressort servant à relier des éléments de machines, par exemple des arbres de véhicules avec un châssis, les deux extrémités du ressort à lames étant reliées, par exemple, chacune par un œil (2), lequel est monté avec liberté de rotation autour d'un axe, à un élément de machine au minimum et, dans la zone située entre les deux extrémités, par l'intermédiaire d'une fixation (5), à l'autre élément de machine, la fixation présentant de préférence au moins deux brides de fixation (12) placées à distance l'une de l'autre dans le sens longitudinal du ressort, entourant ce dernier et le fixant de manière indépendante, l'une au moins de ces brides de fixation étant à plat contre la lame de ressort (1) dans la zone de fixation et le ressort présentant dans cette zone sur une bride de fixation au moins un renflement et/ou un élargissement (17), qui est de préférence en matière synthétique renforcée par fibres, tandis que le ressort à lames (1) est mobile entre deux brides de fixation (12) au moins, en sens sensiblement transversal, normal de préférence, par rapport à la direction longitudinale du ressort.

2. Ressort à lames selon la revendication 1, caractérisé en ce que la bride de fixation (12) présente une enveloppe (14) essentiellement rigide en deux parties de préférence, l'une au moins des surfaces dirigées vers le ressort, située en oblique par rapport à la direction de mouvement de celui-ci, présentant une surface formant coin (20).

3. Ressort à lames selon les revendications 1 et 2, caractérisé en ce qu'entre l'enveloppe rigide (14) et le ressort est placé un corps de remplissage, de préférence un corps de remplissage (18, 19) en matière synthétique organique, fabriqué in situ.

4. Ressort à lames selon la revendication 3, caractérisé en ce que le corps de remplissage (18, 19) présente une matière synthétique organique remplie de préférence de billes, d'acier par exemple.

5. Ressort à lames selon la revendication 4, caractérisé en ce que les billes présentent un diamètre compris entre le 1/5 environ et le 1/20 environ de la plus grande distance normale (a) entre l'enveloppe rigide et le ressort.

6. Ressort à lames selon l'une des revendications 1 à 5, caractérisé en ce que les surfaces formant coin (20) de l'enveloppe rigide et les surfaces (21) du renflement et/ou de l'élargissement (17), qui coopèrent avec elles, forment avec la couche de fibres neutres de la lame de ressort (1) un angle différent.

7. Ressort à lames selon l'une des revendications 1 à 6, caractérisé en ce que l'angle ($\alpha$), formé par la surface formant coin (20) de l'enveloppe rigide avec la couche de fibres neutres (n) de la lame ressort (1), est plus grand que l'angle ($\beta$), formé par cette dernière avec la surface coopérante du renflement et/ou de l'élargissement (17).

8. Ressort à lames selon l'une des revendications 1 à 7, caractérisé en ce que l'angle ($\alpha$), formé par la surface formant coin (20) de l'enveloppe avec la couche de fibres neutres (n) de la lame de ressort voisine (1), se situe entre 15° et 35°, de préférence entre 20° et 30°.

9. Ressort à lames selon l'une des revendications 1 à 8, caractérisé en ce que l'angle ($\beta$) de la surface coopérante du renflement et/ou de l'élargissement (17) avec la couche de fibres neutres (n) de la lame de ressort voisine se situe entre 10° et 20°, de préférence entre 13° et 17°.

10. Ressort à lames selon l'une des revendications 1 à 9, caractérisé en ce que tant l'enveloppe que le renflement et/ou l'élargissement présentent au moins deux surfaces formant coin sur un côté du ressort, qui délimitent avec la couche de fibres neutres des angles différents.

11. Ressort à lames selon l'une des revendications 1 à 10, caractérisé en ce qu'au moins une enveloppe rigide présente des surfaces de rotation, surfaces cylindriques (15) de préférence, placées pour l'essentiel transversalement à la direction longitudinale du ressort, qui, dans la fixation (5), coopèrent avec les surfaces correspondantes (16), de préférence avec intercalage d'un élastomère (22) ou analogue.

12. Ressort à lames selon l'une des revendications 1 à 11, caractérisé en ce que la fixation (5) présente un bâti (11), une cage ou analogue en deux parties au moins, qui est relié(e) indirectement par l'intermédiaire d'éléments de serrage (6), des étriers, des brides, par exemple, à l'arbre et indirectement au ressort (1) par l'intermédiaire d'au moins deux brides de fixation (12).

13. Ressort à lames selon l'une des revendications 1 à 12, caractérisé en ce que, partiellement au moins, les fibres orientées dans la direction longitudinale du ressort présentent au moins la longueur du ressort.

Fig. 1

EP 0 178 286 B1

Fig. 2

EP 0 178 286 B1